# EUROPEAN PATENT SPECIFICATION

(11) **EP 2 754 570 B1**
(45) Date of publication and mention of the grant of the patent: **28.03.2018**
(21) Application number: 12845146.5
(22) Date of filing: 24.10.2012
(51) Int. Cl.: B60C 13/02, B60C 17/00

(54) **PNEUMATIC TIRE**
LUFTREIFEN
PNEUMATIQUE

(30) Priority: 31.10.2011 JP 2011238103
(43) Date of publication of application: 16.07.2014
(73) Proprietor: Sumitomo Rubber Industries, Ltd., Kobe-shi, Hyogo 651-0072 (JP)
(72) Inventor: YUKAWA, Naoki, Hyogo 651-0072 (JP); KUDO, Daisuke, Hyogo 651-0072 (JP)
(74) Representative: Manitz Finsterwald Patentanwälte PartmbB
(86) International application number: PCT/JP2012/077493
(87) International publication number: WO 2013/065552

(56) References cited:
- EP-A1- 2 181 865
- EP-A1- 2 233 322
- EP-A1- 2 305 491
- EP-A1- 2 602 128
- JP-A- 2010 116 091
- JP-A- 2010 274 886

## Description

### TECHNICAL FIELD

The present invention relates to pneumatic tires. Specifically, the present invention relates to pneumatic tires having dimples on side surfaces thereof. The features of the preamble of the independent claim are known from EP 2 305 491 A1. Related technologies are known from EP 2 233 322 A1 and EP 2 181 865 A1.

### BACKGROUND ART

In recent years, run flat tires including load support layers inside sidewalls have been developed and widespread. Highly hard crosslinked rubber is used for the support layers. Such run flat tires are called a side reinforcing type. In this type of a run flat tire, if the internal pressure is reduced due to puncture, a load is supported by the support layers. The support layers suppress flexure of the tire in a punctured state. Even if running is continued in the punctured state, the highly hard crosslinked rubber suppresses heat generation in the support layers. This run flat tire allows for running for some distance even in the punctured state. An automobile having such run flat tires mounted thereon need not be always equipped with a spare tire. The use of this run flat tire avoids change of a tire in an inconvenient place.

When running with the run flat tire in a punctured state is continued, deformation and restoration of the support layers are repeated. Due to the repetition, heat is generated in the support layers, and the temperature of the tire reaches a high temperature. The heat causes breakage of rubber components of the tire and separation among the rubber components of the tire. It is impossible to run with the tire in which the breakage and the separation have occurred. Run flat tires are desired which allow for running for a long period of time in a punctured state, in other words, run flat tires are desired which are less likely to cause breakage and separation due to heat.

WO2007/032405 discloses a run flat tire having a large number of fins on sidewalls thereof. The surface area of the tire having the fins is large. The large surface area promotes release of heat from the tire to the atmosphere. In the tire, the temperature is less likely to rise.

JP2009-298397 discloses a run flat tire having dimples on sidewalls thereof. The surface shape of each dimple is a circle. The surface area of each sidewall is large. In the tire, the dimples generate turbulent flow. The large surface area and the turbulent flow promote release of heat from each sidewall to the atmosphere. In the tire, the temperature is less likely to rise. The tire is excellent in durability during running in a punctured state.

JP2010-274886 discloses a run flat tire having dimples whose surface shapes are elongated circles. In the tire as well, release of heat from each sidewall to the atmosphere is promoted by the dimples. In the tire, the temperature is less likely to rise. The tire is excellent in durability during running in a punctured state.

### CITATION LIST

### PATENT LITERATURE

Patent Literature 1: WO2007/032405
Patent Literature 2: JP2009-298397
Patent Literature 3: JP2010-274886

### SUMMARY OF THE INVENTION

### PROBLEMS TO BE SOLVED BY THE INVENTION

Elements such as fins, dimples, or the like are arranged along a circumferential direction at a predetermined pitch. Each element is formed by a mold. The mold has elements each having a shape that is the inverted shape of the element of the tire. The elements of the mold are formed by machining.

In the machining, the pitch between the elements is generally controlled on the basis of a center angle (degree). When the center angle is an irrational number, control of the processing is difficult. When the center angle is an irrational number, the processing is advanced on the basis of a rational number close to the irrational number. An error gradually increases with the advance of the processing. Compensation for the error is made at any one of the elements. A program for controlling such processing is complicated.

An object of the present invention is to provide a pneumatic tire for which processing of a mold is easy and which is excellent in durability.

### SOLUTION TO THE PROBLEMS

A pneumatic tire according to the present invention, as defined in the independent claim, includes a large number of recessed or projecting elements on side surfaces thereof. These elements are arranged along a circumferential direction at equal pitches. A number of the elements per one rotation is 60, 72, 75, 80, 90, 100, 120, 144, 150, 160, 180, or 200.

Preferably, the pitch between the elements is equal to or greater than 10 mm but equal to or less than 30 mm.

The tire includes a first row in which the large number of elements are aligned along the circumferential direction and a second row in which another large number of elements are aligned along the circumferential direction. Preferably, a number of the elements of the second row is the same as a number of the elements of the first row. Preferably, positions, in the circumferential direction, of the elements of the second row are displaced relative to positions, in the circumferential direction, of the elements of the first row. Preferably, the elements of the first row and the elements of the second row are alternately arranged.

The tire includes:
a tread having an outer surface which forms a tread surface;
a pair of sidewalls extending from ends, respectively, of the tread substantially inward in the radial direction;
a pair of beads located substantially inward of the sidewalls, respectively, in the radial direction;
a carcass extending along the tread and the sidewalls and on and between the beads; and
a pair of load support layers located inward of the sidewalls, respectively, in the axial direction.

### ADVANTAGEOUS EFFECTS OF THE INVENTION

In the pneumatic tire according to the present invention, a large surface area of each side surface is achieved by the elements. The large surface area promotes release of heat from the tire to the atmosphere. The elements further generate turbulent flow around the tire. The turbulent flow promotes release of heat from the tire to the atmosphere. The tire is excellent in durability.

In the tire, a center angle between the elements arranged along the circumferential direction is a rational number, and thus processing of a mold therefor is easy.

### BRIEF DESCRIPTION OF THE DRAWINGS

[FIG. 1] FIG. 1 is a cross-sectional view showing a portion of a pneumatic tire according to one embodiment of the present invention.
[FIG. 2] FIG. 2 is a front view showing a portion of a side surface of the tire in FIG. 1.
[FIG. 3] FIG. 3 is a front view showing a portion of a side surface of a pneumatic tire according to another embodiment of the present invention.
[FIG. 4] FIG. 4 is a front view showing a portion of a side surface of a pneumatic tire according to still another embodiment of the present invention.
[FIG. 5] FIG. 5 is a front view showing a portion of a side surface of a pneumatic tire according to still another embodiment of the present invention.
[FIG. 6] FIG. 6 is a front view showing a portion of a side surface of a pneumatic tire according to still another embodiment of the present invention.
[FIG. 7] FIG. 7 is a front view showing a portion of a side surface of a pneumatic tire as an example for understanding the present invention.

### DESCRIPTION OF EMBODIMENTS

The following will describe in detail the present invention based on preferred embodiments with appropriate reference to the drawings.

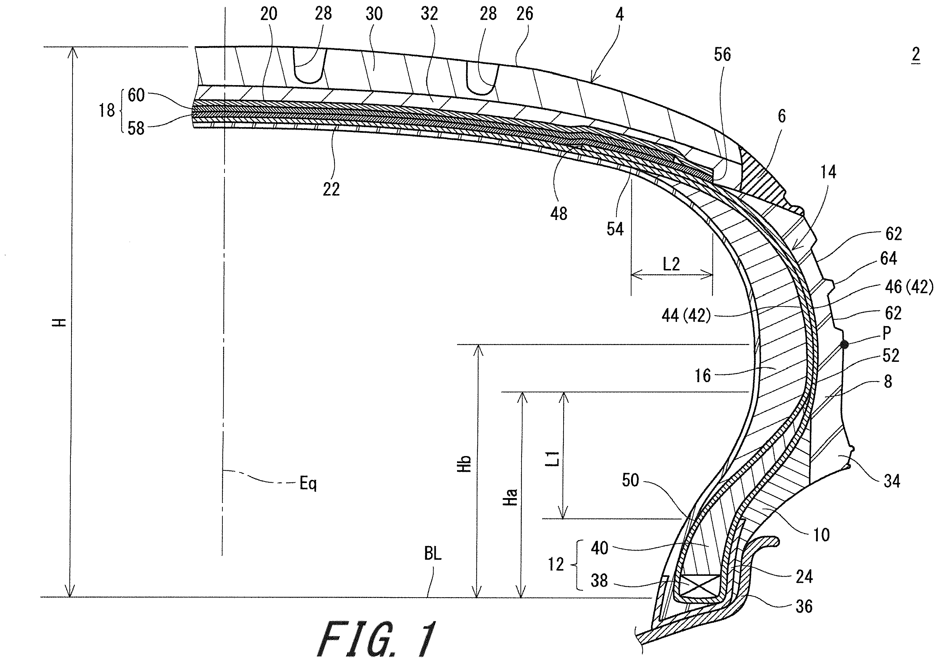

FIG. 1 shows a run flat tire 2. In FIG. 1, the up-down direction is the radial direction of the tire 2, the right-left direction is the axial direction of the tire 2, and the direction perpendicular to the surface of the sheet is the circumferential direction of the tire 2. In FIG. 1, an alternate long and short dash line Eq represents the equator plane of the tire 2. The shape of the tire 2 is symmetrical about the equator plane Eq except for a tread pattern (described in detail later). In FIG. 1, an arrow H represents the height of the tire 2 from a base line BL (described in detail later).

The tire 2 includes a tread 4, wings 6, sidewalls 8, clinches 10, beads 12, a carcass 14, load support layers 16, a belt 18, a band 20, an inner liner 22, and chafers 24. The belt 18 and the band 20 form a reinforcing layer. The reinforcing layer may be composed of the belt 18 only. The reinforcing layer may be composed of the band 20 only.

The tread 4 has a shape projecting outward in the radial direction. The tread 4 forms a tread surface 26 which is brought into contact with a road surface. Grooves 28 are formed on the tread surface 26. A tread pattern is formed by the grooves 28. The tread 4 includes a cap layer 30 and a base layer 32. The cap layer 30 is formed from a crosslinked rubber. The base layer 32 is formed from another crosslinked rubber. The cap layer 30 is located outward of the base layer 32 in the radial direction. The cap layer 30 is laminated on the base layer 32.

The sidewalls 8 extend from the ends of the tread 4 substantially inward in the radial direction. The sidewalls 8 are formed from a crosslinked rubber. The sidewalls 8 prevent injury of the carcass 14. The sidewalls 8 include ribs 34. The ribs 34 project outward in the axial direction. During running in a punctured state, the ribs 34 abut against flanges 36 of a rim. The abutment allows deformation of the beads 12 to be suppressed. The tire 2 in which the deformation is suppressed is excellent in durability in a punctured state.

The clinches 10 are located substantially inward of the sidewalls 8 in the radial direction. The clinches 10 are located outward of the beads 12 and the carcass 14 in the axial direction. The clinches 10 abut against the flanges 36 of the rim.

The beads 12 are located inward of the sidewalls 8 in the radial direction. Each bead 12 includes a core 38 and an apex 40 extending from the core 38 outward in the radial direction. The core 38 has a ring shape and includes a non-stretchable wound wire (typically, a steel wire). The apex 40 is tapered outward in the radial direction. The apex 40 is formed from a highly hard crosslinked rubber.

In FIG. 1, an arrow Ha indicates the height of the apex 40 from the base line BL. In other words, the height Ha is the distance from the base line to an outer end, in the radial direction, of the bead. The base line BL passes through an innermost point, in the radial direction, on the core 38. The base line BL extends in the axial direction. The ratio (Ha/H) of the height Ha of the apex 40 to the height H of the tire 2 is preferably equal to or greater than 0.1 and preferably equal to or less than 0.7. The apex 40 having a ratio (Ha/H) of 0.1 or greater can support the weight of the vehicle in a punctured state. The apex 40 contributes to durability of the tire 2 in a punctured state. In this respect, the ratio (Ha/H) is more preferably equal to or greater than 0.2. The tire 2 having a ratio (Ha/H) of 0.7 or less is excellent in ride comfort. In this respect, the ratio (Ha/H) is more preferably equal to or less than 0.6.

In FIG. 1, an arrow Hb indicates the height at a position P of a maximum width from the base line BL. The ratio of the height Ha to the height Hb is preferably equal to or greater than 80%. The stiffness of each side portion of the tire 2 in which the ratio is equal to or greater than 80% is high. In the tire 2, deformation of each side portion relative to the rim flange as a fulcrum at the time of puncture is suppressed. The tire 2 is excellent in durability in a punctured state. In this respect, the ratio is more preferably equal to or greater than 85% and particularly preferably equal to or greater than 90%. In light of ride comfort in a normal state (a state where the tire 2 is inflated to a normal internal pressure), the ratio is preferably equal to or less than 110%.

The carcass 14 is formed of a carcass ply 42. The carcass ply 42 extends on and between the beads 12 on both sides, and extends along the tread 4 and the sidewalls 8. The carcass ply 42 is turned up around each core 38 from the inner side to the outer side in the axial direction. Due to this turning-up, a main portion 44 and turned-up portions 46 are formed in the carcass ply 42. Ends 48 of the turned-up portions 46 are located immediately below the belt 18. In other words, each turned-up portion 46 overlaps the belt 18. The carcass 14 has a so-called "ultra-highly turned-up structure". The carcass 14 having the ultra-highly turned-up structure contributes to durability of the tire 2 in a punctured state. The carcass 14 contributes to durability in a punctured state.

The carcass ply 42 includes a large number of cords aligned with each other, and a topping rubber. The absolute value of the angle of each cord relative to the equator plane is 45° to 90° and further 75° to 90°. In other words, the carcass 14 has a radial structure. The cords are formed from an organic fiber. Examples of preferable organic fibers include polyester fibers, nylon fibers, rayon fibers, polyethylene naphthalate fibers, and aramid fibers.

The load support layers 16 are located inward of the sidewalls 8 in the axial direction. Each support layer 16 is interposed between the carcass 14 and the inner liner 22. The support layers 16 are tapered inward and outward in the radial direction. Each support layer 16 has a crescent-like shape. The support layers 16 are formed from a highly hard crosslinked rubber. When the tire 2 is punctured, the support layers 16 support a load. The support layers 16 allow for running for some distance with the tire 2 even in a punctured state. The run flat tire 2 is of a side reinforcing type. The tire 2 may include support layers each having a shape different from the shape of the support layer 16 shown in FIG. 1.

Portions of the carcass 14 which overlap the support layers 16 are separated from the inner liner 22. In other words, the carcass 14 is bent due to the presence of the support layers 16. In a punctured state, a compressive load is applied to the support layers 16, and a tensile load is applied to regions of the carcass 14 which are near the support layers 16. Each support layer 16 is a lump of rubber and can sufficiently bear the compressive load. The cords of the carcass 14 can sufficiently bear the tensile load. The support layers 16 and the carcass cords suppress vertical flexure of the tire 2 in the punctured state. The tire 2 of which vertical flexure is suppressed is excellent in handling stability in a punctured state.

In light of suppression of vertical distortion in a punctured state, the hardness of each support layer 16 is preferably equal to or greater than 60 and more preferably equal to or greater than 65. In light of ride comfort in a normal state, the hardness is preferably equal to or less than 90 and more preferably equal to or less than 80. The hardness is measured according to the standard of "JIS K6253" with a type A durometer. The hardness is measured by pressing the durometer against the cross section shown in FIG. 1. The measurement is performed at a temperature of 23°C.

Lower ends 50 of the support layers 16 are located inward of upper ends 52 of the apexes 40 (i.e., outer ends, in the radial direction, of the beads) in the radial direction. In other words, the support layers 16 overlap the apexes 40. In FIG. 1, an arrow L1 indicates the distance in the radial direction between the lower end 50 of each support layer 16 and the upper end 52 of the corresponding apex 40. The distance L1 is preferably equal to or greater than 5 mm and preferably equal to or less than 50 mm. In the tire 2 in which the distance L1 is within this range, a uniform stiffness distribution is obtained. The distance L1 is more preferably equal to or greater than 10 mm. The distance L1 is more preferably equal to or less than 40 mm.

Upper ends 54 of the support layers 16 are located inward of ends 56 of the belt 18 in the axial direction. In other words, the support layers 16 overlap the belt 18. In FIG. 1, an arrow L2 indicates the distance in the axial direction between the upper end 54 of each support layer 16 and the corresponding end 56 of the belt 18. The distance L2 is preferably equal to or greater than 2 mm and preferably equal to or less than 50 mm. In the tire 2 in which the distance L2 is within this range, a uniform stiffness distribution is obtained. The distance L2 is more preferably equal to or greater than 5 mm. The distance L1 is more preferably equal to or less than 40 mm.

In light of suppression of vertical distortion in a punctured state, the maximum thickness of each support layer 16 is preferably equal to or greater than 3 mm and particularly preferably equal to or greater than 4 mm. In light of reduction in the weight of the tire 2, the maximum thickness is preferably equal to or less than 15 mm and particularly preferably equal to or less than 10 mm.

The belt 18 is located outward of the carcass 14 in the radial direction. The belt 18 is laminated on the carcass 14. The belt 18 reinforces the carcass 14. The belt 18 includes an inner layer 58 and an outer layer 60. As is obvious from FIG. 1, the width of the inner layer 58 is slightly greater than the width of the outer layer 60. Each of the inner layer 58 and the outer layer 60 includes a large number of cords aligned with each other, and a topping rubber, which are not shown. Each cord is tilted relative to the equator plane. Normally, the absolute value of the tilt angle is equal to or greater than 10° but equal to or less than 35°. The direction in which each cord of the inner layer 58 is tilted relative to the equator plane is opposite to the direction in which each cord of the outer layer 60 is tilted relative to the equator plane. The material of the cords is preferably steel. An organic fiber may be used for the cords. The width, in the axial direction, of the belt 18 is preferably equal to or greater than 0.85 times of the maximum width W (described in detail later) of the tire 2 and preferably equal to or less than 1.0 time of the maximum width W of the tire 2. The belt 18 may include three or more layers.

The band 20 covers the belt 18. The band 20 includes a cord and a topping rubber, which are not shown. The cord is helically wound. The band 20 has a so-called jointless structure. The cord extends substantially in the circumferential direction. The angle of the cord relative to the circumferential direction is equal to or less than 5° and further equal to or less than 2°. The belt 18 is secured by the cord, so that lifting of the belt 18 is suppressed. The cord is formed from an organic fiber. Examples of preferable organic fibers include nylon fibers, polyester fibers, rayon fibers, polyethylene naphthalate fibers, and aramid fibers.

The tire 2 may include, instead of the band 20, edge bands which cover only the vicinities of the ends 56 of the belt 18. The tire 2 may include both the band 20 and the edge bands.

The inner liner 22 is bonded to the inner peripheral surface of the carcass 14. The inner liner 22 is formed from a crosslinked rubber. A rubber that has an excellent air blocking property is used for the inner liner 22. The inner liner 22 maintains the internal pressure of the tire 2.

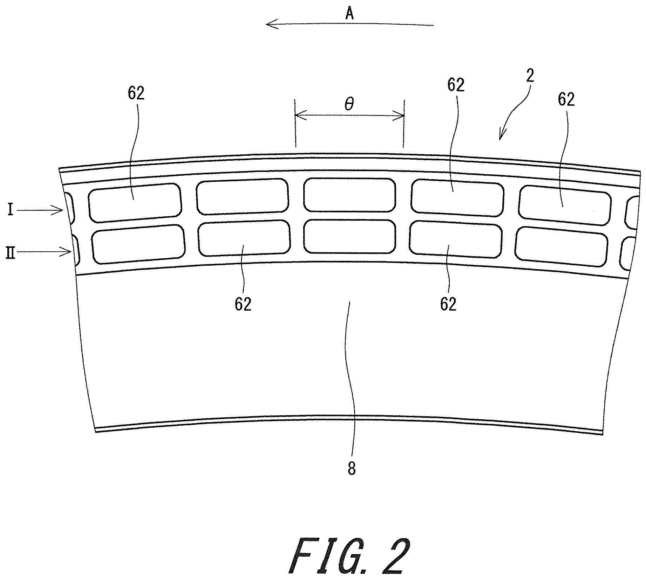

In FIG. 2, the up-down direction is the radial direction, and the direction indicated by an arrow A is the circumferential direction. As shown in FIGS. 1 and 2, the tire 2 has a large number of dimples 62 (elements) on the side surfaces thereof. In the present invention, the side surfaces mean regions of the outer surfaces of the tire 2 that can be viewed in the axial direction. Typically, the dimples 62 are formed on the surfaces of the sidewalls 8. Of each sidewall 8, a part other than the dimples 62 is a land 64. As is obvious from FIG. 1, the dimples 62 are recessed from the land 64. As shown in FIG. 2, the contour of each dimple 62 is generally a rectangle. It should be noted that each corner is rounded.

The surface area of each sidewall 8 having the dimples 62 is larger than the surface area of the sidewall 8 when it is postulated that no dimples 62 exist thereon. The area of contact between the tire 2 and the atmosphere is large. The large area of contact promotes release of heat from the tire 2 to the atmosphere.

The tire 2 rotates during running. A vehicle on which the tire 2 is mounted travels. By the rotation of the tire 2 and the travelling of the vehicle, air flows across the dimples 62. At that time, eddies are generated in the flow of the air. In other words, turbulent flow is generated at the dimple 62. When running with the tire 2 is continued in a punctured state, deformation and restoration of the support layers 16 are repeated. Due to the repetition, heat is generated in the support layers 16. The turbulent flow promotes release of the heat to the atmosphere. In the tire 2, breakage of rubber components and separation among the rubber components which are caused due to heat are suppressed. The tire 2 allows for running for a long period of time in a punctured state. The turbulent flow contributes to heat release not only in a punctured state but also in a normal state. The dimples 62 also contribute to durability of the tire 2 in a normal state. Running of the vehicle in a state where the internal pressure is less than a normal value may be inadvertently caused by a driver. The dimples 62 can also contribute to durability of the tire 2 in this case.

In the tire 2, temperature rise is suppressed by the dimples 62. Thus, even when the support layers 16 are thin, running in a punctured state for a long period of time is possible. The thin support layers 16 achieve reduction in the weight of the tire 2. The thin support layers 16 reduce rolling resistance. The tire 2 which is lightweight and has reduced rolling resistance contributes to reduction in the fuel consumption of a vehicle. Furthermore, the thin support layers 16 also achieve excellent ride comfort.

As is obvious from FIG. 2, the dimples 62 can be divided into dimples 62 of a first row I and dimples 62 of a second row II. The number of the rows in the tire 2 is 2. The number of the rows is preferably equal to or greater than 2 and preferably equal to or less than 6.

The dimples 62 of the second row II are located inward of the dimples 62 of the first row I in the radial direction. The dimples 62 of the first row I are aligned along the circumferential direction. The shapes of all the dimples 62 of the first row are the same. In the first row I, the dimples 62 are aligned at equal pitches. The dimples 62 of the second row II are also aligned along the circumferential direction. The shapes of all the dimples 62 of the second row II are the same. In the second row II as well, the dimples 62 are aligned at equal pitches. In this embodiment, the number of the dimples 62 of the first row I is the same as the number of the dimples 62 of the second row II.

In FIG. 2, an arrow θ indicates a center angle (degree) between the adjacent dimples 62. Hereinafter, the center angle is referred to as "pitch angle". As described above, the number of the dimples 62 of the first row I is the same as the number of the dimples 62 of the second row II. Therefore, the pitch angle in the first row is the same as the pitch angle in the second row. When processing of a mold for the tire 2 is prepared, a result of calculation of the pitch angle in the first row I can be used directly for calculation of the pitch angle in the second row II. The processing of the mold is easy. The number of the dimples 62 of the first row I may be different from the number of the dimples 62 of the second row II.

As described above, the dimples 62 of the second row II are located inward of the dimples 62 of the first row I in the radial direction. Therefore, the pitch (mm) between the dimples 62 in the first row is slightly larger than the pitch (mm) between the dimples 62 in the second row.

A value obtained by dividing 360 by the number of the dimples 62 is the pitch angle. When the number of the dimples 62 with which the pitch angle becomes a rational number is selected, a program for compensation is unnecessary. When the pitch angle is a rational number, the processing of the mold for the tire 2 is easy. Examples of the number of the dimples 62 with which the pitch angle becomes a rational number include 2, 3, 4, 5, 6, 8, 9, 10, 12, 15, 16, 18, 20, 24, 25, 30, 32, 36, 40, 48, 50, 60, 72, 75, 80, 90, 100, 120, 144, 150, 160, 180, 200, 225, 240, 300, 360, 375, 400, 450, 480, 500, 600, and 720.

When the number of the dimples 62 per one row is 2, 3, 4, 5, 6, 8, 9, 10, 12, 15, 16, 18, 20, 24, 25, 30, 36, 40, 48, 50, 60, 72, 75, 80, 90, 100, 120, 144, 150, 180, 200, 225, 240, 300, 360, 400, 450, 600, or 720, the number of the decimal places of the pitch angle is 0 or 1. The processing of the mold in this case is very easy.

The pitch between the dimples 62 is preferably equal to or greater than 10 mm and preferably equal to or less than 30 mm. In the tire 2 in which the pitch is equal to or greater than 10 mm, each dimple 62 can have a sufficient size. The dimples 62 contribute to generation of turbulent flow. The tire 2 in which the pitch is equal to or greater than 10 mm is lightweight. In these respects, the pitch is particularly preferably equal to or greater than 15 mm. The tire 2 in which the pitch is equal to or less than 30 mm can have a large number of dimples 62. In the tire 2, turbulent flow can be generated at a large number of locations. In this respect, the pitch is particularly preferably equal to or less than 25 mm.

From the standpoint that an appropriate pitch can be achieved, the number of the dimples 62 per one row is preferably 60, 72, 75, 80, 90, 100, 120, 144, 150, 160, 180, or 200.

The ratio of the length (mm), in the circumferential direction, of each dimple 62 relative to the pitch (mm) is preferably equal to or greater than 70%. In the tire 2 in which the ratio is equal to or greater than 70%, temperature rise can be suppressed. In this respect, the ratio is more preferably equal to or greater than 80% and particularly preferably equal to or greater than 90%. In light of strength of the land 64, the ratio is preferably equal to or less than 95%.

In production of the tire 2, a plurality of rubber components are assembled to obtain a raw cover (unvulcanized tire). The raw cover is put into a mold. The outer surface of the raw cover abuts against the cavity surface of the mold. The inner surface of the raw cover abuts against a bladder or a core. The raw cover is pressurized and heated in the mold. The rubber composition in the raw cover flows due to the pressurization and the heating. Cross-linking reaction is caused in the rubber due to the heating, to obtain the tire 2. The dimples 62 are formed in the tire 2 by using a mold having pimples on a cavity surface thereof.

The dimensions and angles of each component of the tire are measured in a state where the tire is mounted on a normal rim and inflated to a normal internal pressure, unless otherwise specified. During the measurement, no load is applied to the tire. In the present specification, the normal rim means a rim specified in a standard on which the tire is based. The "standard rim" in the JATMA standard, the "Design Rim" in the TRA standard, and the "Measuring Rim" in the ETRTO standard are normal rims. In the present specification, the normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. It should be noted that in the case of a tire for passenger car, the dimensions and angles are measured in a state where the internal pressure is 180 kPa.

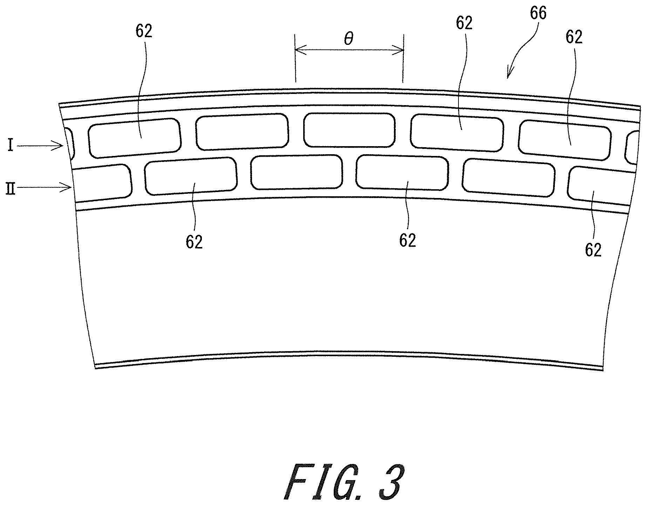

FIG. 3 is a front view showing a portion of a side surface of a pneumatic tire 66 according to another embodiment of the present invention. The tire 66 has a large number of dimples 62. The configuration of the tire 66 except for the dimples 62 is the same as that of the tire 2 shown in FIG. 1.

As is obvious from FIG. 3, the dimples 62 can be divided into dimples 62 of a first row I and dimples 62 of a second row II. The number of the rows in the tire 66 is 2. The dimples 62 of the second row II are located inward of the dimples 62 of the first row I in the radial direction. The dimples 62 of the first row I are aligned along the circumferential direction. The shapes of all the dimples 62 of the first row are the same. In the first row I, the dimples 62 are aligned at equal pitches. The dimples 62 of the second row II are also aligned along the circumferential direction. The shapes of all the dimples 62 of the second row II are the same. In the second row II as well, the dimples 62 are aligned at equal pitches. In this embodiment, the number of the dimples 62 of the first row I is the same as the number of the dimples 62 of the second row II.

In the tire 66 as well, the pitch angle θ is preferably a rational number. The number of the decimal places of the pitch angle θ is preferably 0 or 1.

As is obvious from FIG. 3, the positions, in the circumferential direction, of the dimples 62 of the second row II are displaced relative to the positions, in the circumferential direction, of the dimples 62 of the first row I. The amount of the displacement is 1/2 of the pitch angle. In other words, the dimples 62 of the first row I and the dimples 62 of the second row II are alternately arranged. In the tire 66, locations where turbulent flow is generated are dispersed. In the tire 66, the heat release effect by turbulent flow is great.

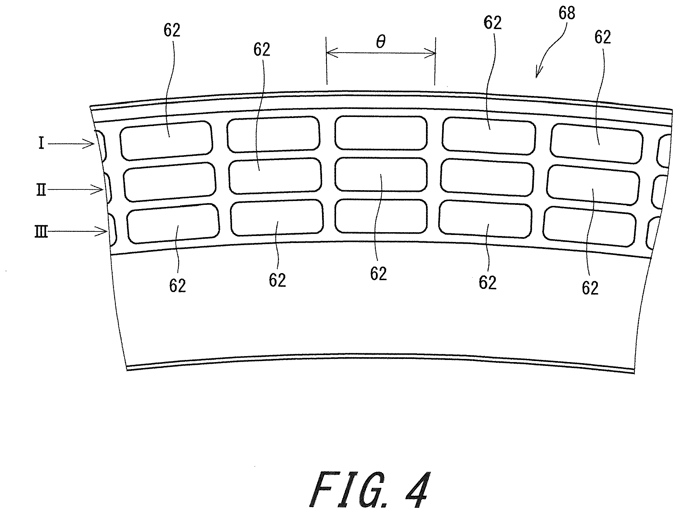

FIG. 4 is a front view showing a portion of a side surface of a pneumatic tire 68 according to still another embodiment of the present invention. The tire 68 has a large number of dimples 62. The configuration of the tire 68 except for the dimples 62 is the same as that of the tire 2 shown in FIG. 1.

As is obvious from FIG. 4, the dimples 62 can be divided into dimples 62 of a first row I, dimples 62 of a second row II, and dimples 62 of a third row III. The number of the rows in the tire 68 is 3. The dimples 62 of the second row II are located inward of the dimples 62 of the first row I in the radial direction. The dimples 62 of the third row III are located inward of the dimples 62 of the second row II in the radial direction. The dimples 62 of the first row I are aligned along the circumferential direction. The shapes of all the dimples 62 of the first row are the same. In the first row I, the dimples 62 are aligned at equal pitches. The dimples 62 of the second row II are also aligned along the circumferential direction. The shapes of all the dimples 62 of the second row II are the same. In the second row II as well, the dimples 62 are aligned at equal pitches. The dimples 62 of the third row III are also aligned along the circumferential direction. The shapes of all the dimples 62 of the third row III are the same. In the third row III as well, the dimples 62 are aligned at equal pitches. In this embodiment, the number of the dimples 62 of the first row I is the same as the number of the dimples 62 of the second row II and is also the same as the number of the dimples 62 of the third row III. In the tire 68 as well, heat release is promoted by the dimples 62.

In the tire 68 as well, the pitch angle θ is preferably a rational number. The number of the decimal places of the pitch angle θ is preferably 0 or 1.

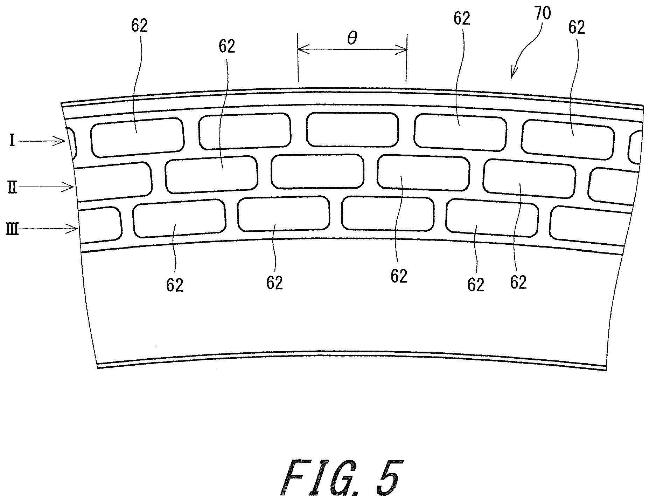

FIG. 5 is a front view showing a portion of a side surface of a pneumatic tire 70 according to still another embodiment of the present invention. The tire 70 has a large number of dimples 62. The configuration of the tire 70 except for the dimples 62 is the same as that of the tire 2 shown in FIG. 1.

As is obvious from FIG. 5, the dimples 62 can be divided into dimples 62 of a first row I, dimples 62 of a second row II, and dimples 62 of a third row III. The number of the rows in the tire 70 is 3. The dimples 62 of the second row II are located inward of the dimples 62 of the first row I in the radial direction. The dimples 62 of the third row III are located inward of the dimples 62 of the second row II in the radial direction. The dimples 62 of the first row I are aligned along the circumferential direction. The shapes of all the dimples 62 of the first row are the same. In the first row I, the dimples 62 are aligned at equal pitches. The dimples 62 of the second row II are also aligned along the circumferential direction. The shapes of all the dimples 62 of the second row II are the same. In the second row II as well, the dimples 62 are aligned at equal pitches. The dimples 62 of the third row III are also aligned along the circumferential direction. The shapes of all the dimples 62 of the third row III are the same. In the third row III as well, the dimples 62 are aligned at equal pitches. In this embodiment, the number of the dimples 62 of the first row I is the same as the number of the dimples 62 of the second row II and is also the same as the number of the dimples 62 of the third row III.

In the tire 70 as well, the pitch angle θ is preferably a rational number. The number of the decimal places of the pitch angle θ is preferably 0 or 1.

As is obvious from FIG. 5, the positions, in the circumferential direction, of the dimples 62 of the second row II are displaced relative to the positions, in the circumferential direction, of the dimples 62 of the first row I. The amount of the displacement is 1/3 of the pitch angle. The direction of the displacement is the counterclockwise direction in FIG. 5. The positions, in the circumferential direction, of the dimples 62 of the third row III are displaced relative to the positions, in the circumferential direction, of the dimples 62 of the second row II. The amount of the displacement is 1/3 of the pitch angle. The direction of the displacement is the counterclockwise direction in FIG. 5. In the tire 70, locations where turbulent flow is generated are dispersed. In the tire 70, the heat release effect by turbulent flow is great.

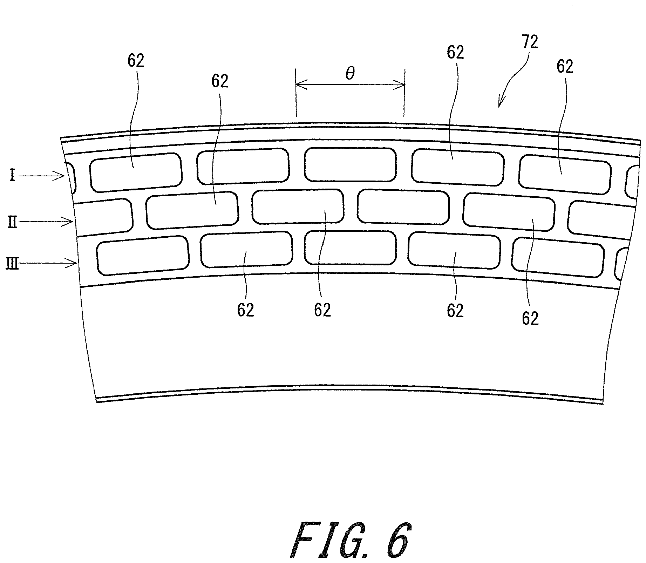

FIG. 6 is a front view showing a portion of a side surface of a pneumatic tire 72 according to still another embodiment of the present invention. The tire 72 has a large number of dimples 62. The configuration of the tire 72 except for the dimples 62 is the same as that of the tire 2 shown in FIG. 1.

As is obvious from FIG. 6, the dimples 62 can be divided into dimples 62 of a first row I, dimples 62 of a second row II, and dimples 62 of a third row III. The number of the rows in the tire 72 is 3. The dimples 62 of the second row II are located inward of the dimples 62 of the first row I in the radial direction. The dimples 62 of the third row III are located inward of the dimples 62 of the second row II in the radial direction. The dimples 62 of the first row I are aligned along the circumferential direction. The shapes of all the dimples 62 of the first row are the same. In the first row I, the dimples 62 are aligned at equal pitches. The dimples 62 of the second row II are also aligned along the circumferential direction. The shapes of all the dimples 62 of the second row II are the same. In the second row II as well, the dimples 62 are aligned at equal pitches. The dimples 62 of the third row III are also aligned along the circumferential direction. The shapes of all the dimples 62 of the third row III are the same. In the third row III as well, the dimples 62 are aligned at equal pitches. In this embodiment, the number of the dimples 62 of the first row I is the same as the number of the dimples 62 of the second row II and is also the same as the number of the dimples 62 of the third row III.

In the tire 72 as well, the pitch angle θ is preferably a rational number. The number of the decimal places of the pitch angle θ is preferably 0 or 1.

As is obvious from FIG. 6, the positions, in the circumferential direction, of the dimples 62 of the second row II are displaced relative to the positions, in the circumferential direction, of the dimples 62 of the first row I. The amount of the displacement is 1/2 of the pitch angle. In other words, the dimples 62 of the first row I and the dimples 62 of the second row II are alternately arranged. The positions, in the circumferential direction, of the dimples 62 of the third row III are displaced relative to the positions, in the circumferential direction, of the dimples 62 of the second row II. The amount of the displacement is 1/2 of the pitch angle. In other words, the dimples 62 of the second row II and the dimples 62 of the third row III are alternately arranged. In the tire 72, locations where turbulent flow is generated are dispersed. In the tire 72, the heat release effect by turbulent flow is great.

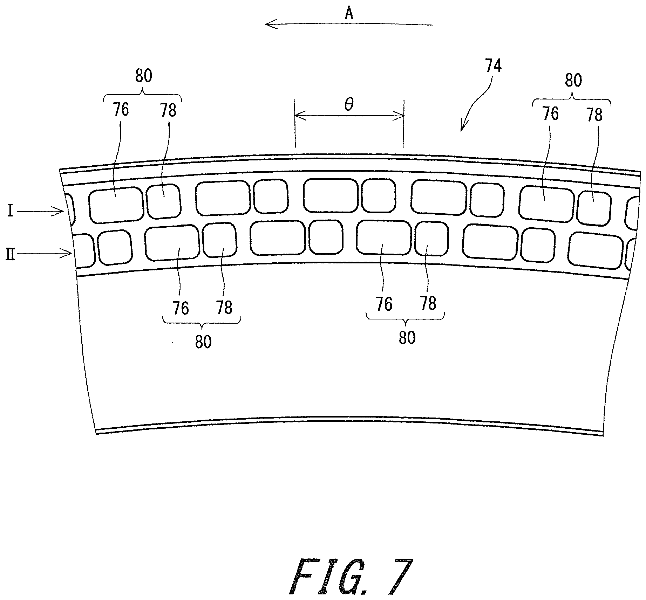

FIG. 7 is a front view showing a portion of a side surface of a pneumatic tire 74 an as an example for understanding the present invention. The tire 74 has a large number of dimples 76 and 78. The configuration of the tire 74 except for the dimples 76 and 78 is the same as that of the tire 2 shown in FIG. 1.

As is obvious from FIG. 7, a first row I includes large dimples 76 and small dimples 78. The large dimples 76 and the small dimples 78 are alternately arranged. One element 80 is formed from one large dimple 76 and one small dimple 78. A second row II also includes large dimples 76 and small dimples 78. The large dimples 76 and the small dimples 78 are alternately arranged. One element 80 is formed from one large dimple 76 and one small dimple 78.

The elements 80 of the second row II are located inward of the elements 80 of the first row I in the radial direction. The elements 80 of the first row I are aligned along the circumferential direction. In the first row I, the elements 80 are aligned at equal pitches. The dimples 62 of the second row II are also aligned along the circumferential direction. In the second row II as well, the elements 80 are aligned at equal pitches. In this embodiment, the number of the elements 80 of the first row I is the same as the number of the elements 80 of the second row II.

In the tire 74 as well, the pitch angle θ between the elements 80 is preferably a rational number. The number of the decimal places of the pitch angle θ is preferably 0 or 1.

### EXAMPLES

The following will show effects of the present invention by means of examples, but the present invention should not be construed in a limited manner based on the description of these examples.

### [Example 1]

The run flat tire shown in FIG. 3 was produced. The size of the tire is 245/40R19. Each side surface of the tire has dimples of a first row and dimples of a second row. The number of the dimples of the first row is 180, and the number of the dimples of the second row is 180.

### [Examples 2 to 6 and Comparative Example 1]

Tires of Examples 2 to 6 and Comparative Example 1 were obtained in the same manner as Example 1, except the numbers of the dimples of the first row and the second row were as shown in Tables 1 and 2 below.

### [Example 7]

The run flat tire shown in FIG. 4 was produced. The size of the tire is 215/50R17. Each side surface of the tire has dimples of a first row, dimples of a second row, and dimples of a third row. The number of the dimples of each row is 90.

### [Examples 8 to 11 and Comparative Example 2]

Tires of Examples 8 to 11 and Comparative Example 2 were obtained in the same manner as Example 7, except the numbers of the dimples of the first row, the second row, and the third row were as shown in Tables 3 and 4 below.

### [Examples 12 and 13]

A tire of Example 12 was obtained in the same manner as Example 7, except the arrangement of the dimples was as shown in FIG. 5. A tire of Example 13 was obtained in the same manner as Example 7, except the arrangement of the dimples was as shown in FIG. 6.

### [Running Test]

Each tire was mounted on a rim and inflated such that the internal pressure thereof became 220 kPa. A valve core of the tire was removed to cause the inside of the tire to communicate with the atmosphere. The tire was run on a drum. The average temperature of the side surfaces was measured with a thermography after 15 minutes from start of the running. The running was continued further, and a running distance until abnormal noise was generated from the tire was measured. The results are shown as indexes in Tables 1 to 5 below. A lower index of the average temperature indicates a better result. A higher index of the running distance indicates a better result. The test conditions for the tires according to Examples 1 to 6 and Comparative Example 1 are as follows.
Load: 4.3 kN
Rim: 8.5J
Speed: 80 km/h
The test conditions for the tires according to Examples 7 to 13 and Comparative Example 2 are as follows.
Load: 3.8 kN
Rim: 7J
Speed: 80 km/h

### [Measurement of Weight]

A weight by which a tire is increased in weight by forming dimples was measured. The results are shown as indexes in Tables 1 to 5 below. A lower index indicates a better result.

### [Calculation of Processing Preparation Time]

A preparation time for processing of a mold was calculated. The results are shown as indexes in Tables 1 to 5 below. A lower index indicates a better result. The details of the preparation time are shown in Tables 6 to 8 below.

### [Table1]

**Table 1 Results of Evaluation**

| | Comparative Example 1 | | Example 2 | | Example 1 | | Example 3 | |
|---|---|---|---|---|---|---|---|---|
| Size | 245/40R19 | | 245/40R19 | | 245/40R19 | | 245/40R19 | |
| Front view | - | | - | | FIG. 3 | | - | |
| Row | I | II | I | II | I | II | I | II |
| Radius (mm) | 614.8 | 596.2 | 614.8 | 596.2 | 614.8 | 596.2 | 614.8 | 596.2 |
| Circumferential length (mm) | 1931.45 | 1873.02 | 1931.45 | 1873.02 | 1931.45 | 1873.02 | 1931.45 | 1873.02 |
| Number | 97 | 94 | 100 | 90 | 180 | 180 | 200 | 200 |
| Pitch (mm) | 19.91 | 19.93 | 19.31 | 20.81 | 10.73 | 10.41 | 9.66 | 9. 37 |
| Proper pitch angle (degree) | 3.711 | 3.830 | 3. 600 | 4.000 | 2.000 | 2.000 | 1.800 | 1.800 |
| Post-processing pitch angle (degree) | 3. 71 | 3.83 | 3.60 | 4.00 | 2.00 | 2.00 | 1.80 | 1.80 |
| Total error (mm) | 0.697 | -0.104 | 0.000 | 0.000 | 0.000 | 0.000 | 0.000 | 0.000 |
| Total error angle (degree) | 0.13 | -0.02 | 0.00 | 0.00 | 0.00 | 0.00 | 0.00 | 0.00 |
| Error ratio (%) | 3.5 | -0.5 | 0.0 | 0.0 | 0.0 | 0.0 | 0.0 | 0.0 |
| Average temperature (index) | 100 | | 99 | | 83 | | 83 | |
| Running distance (index) | 100 | | 100 | | 120 | | 120 | |
| Increased weight (index) | 100 | | 99 | | 188 | | 209 | |
| Processing preparation time (index) | 100 | | 67 | | 38 | | 38 | |

### [Table 2]

**Table 2 Results of Evaluation**

| | Example 4 | | Example 5 | | Example 6 | |
|---|---|---|---|---|---|---|
| Size | 245/40R19 | | 245/40R19 | | 245/40R19 | |
| Front view | - | | - | | - | |
| Row | I | II | I | II | I | II |
| Radius (mm) | 614.8 | 596.2 | 614.8 | 596.2 | 614.8 | 596.2 |
| Circumferential length (mm) | 1931.45 | 1873.02 | 1931.45 | 1873.02 | 1931.45 | 1873.02 |
| Number | 72 | 72 | 60 | 60 | 100 | 100 |
| Pitch (mm) | 26.83 | 26.01 | 32.19 | 31.22 | 19.31 | 18. 73 |
| Proper pitch angle (degree) | 5.000 | 5.000 | 6.000 | 6.000 | 3. 600 | 3.600 |
| Post-processing pitch angle (degree) | 5.00 | 5.00 | 6.00 | 6.00 | 3.60 | 3. 60 |
| Total error (mm) | 0.000 | 0.000 | 0.000 | 0.000 | 0.000 | 0.000 |
| Total error angle (degree) | 0.00 | 0.00 | 0.00 | 0.00 | 0.00 | 0.00 |
| Error ratio (%) | 0.0 | 0.0 | 0.0 | 0.0 | 0.0 | 0.0 |
| Average temperature (index) | 111 | | 125 | | 98 | |
| Running distance (index) | 95 | | 80 | | 103 | |
| Increased weight (index) | 75 | | 63 | | 105 | |
| Processing preparation time (index) | 38 | | 38 | | 38 | |

### [Table 3]

**Table 3 Results of Evaluation**

| | Comparative Example 2 | | | Example 7 | | | Example 8 | | |
|---|---|---|---|---|---|---|---|---|---|
| Size | 215/50R17 | | | 215/50R17 | | | 215/50R17 | | |
| Front view | - | | | FIG. 4 | | | - | | |
| Row | I | II | III | I | II | III | I | II | III |
| Rad i us (mm) | 583.2 | 564. 6 | 544.8 | 583.2 | 564.6 | 544. 8 | 583.2 | 564.6 | 544.8 |
| Circumferential length (mm) | 1832.18 | 1773.74 | 1711.54 | 1832.18 | 1773. 74 | 1711.54 | 1832.18 | 1773. 74 | 1711.54 |
| Number | 92 | 89 | 86 | 90 | 90 | 90 | 180 | 160 | 160 |
| Pitch (mm) | 19.91 | 19. 93 | 19.90 | 20.36 | 19.71 | 19.02 | 10.18 | 11.09 | 10.70 |
| Proper pitch angle (degree) | 3.913 | 4.045 | 4.186 | 4.000 | 4.000 | 4.000 | 2.000 | 2. 250 | 2.250 |
| Post-processing pitch angle (degree) | 3.91 | 4.05 | 4.19 | 4.00 | 4.00 | 4.00 | 2.00 | 2.25 | 2. 25 |
| Total error (mm) | 1.425 | -2.217 | -1.616 | 0.000 | 0.000 | 0.000 | 0.000 | 0.000 | 0.000 |
| Total error angle (degree) | 0.28 | -0.45 | -0.34 | 0.00 | 0.00 | 0.00 | 0.00 | 0.00 | 0.00 |
| Error ratio (%) | 7.2 | -11.1 | -8.1 | 0.0 | 0.0 | 0.0 | 0.0 | 0.0 | 0.0 |
| Average temperature (index) | 100 | | | 99 | | | 85 | | |
| Running distance (index) | 100 | | | 100 | | | 115 | | |
| Increased weight (index) | 100 | | | 101 | | | 187 | | |
| Processing preparation time (index) | 100 | | | 27 | | | 32 | | |

### [Table 3]

**Table 4 Results of Evaluation**

| | Example 9 | | | Example 10 | | | Example 11 | | |
|---|---|---|---|---|---|---|---|---|---|
| Size | 215/50R17 | | | 215/50R17 | | | 215/50R17 | | |
| Front view | - | | | - | | | - | | |
| Row | I | II | III | I | II | III | I | II | III |
| Rad i us (mm) | 583.2 | 564.6 | 544.8 | 583.2 | 564. 6 | 544.8 | 583.2 | 564.6 | 544.8 |
| Circumferential length (mm) | 1832.18 | 1773.74 | 1711.54 | 1832.18 | 1773.74 | 1711.54 | 1832.18 | 1773. 74 | 1711.54 |
| Number | 200 | 180 | 180 | 72 | 60 | 60 | 60 | 50 | 50 |
| Pitch (mm) | 9.16 | 9. 85 | 9.51 | 25.45 | 29.56 | 28.53 | 30. 54 | 35.47 | 34. 23 |
| Proper pitch angle (degree) | 1.800 | 2.000 | 2.000 | 5.000 | 6.000 | 6.000 | 6.000 | 7. 200 | 7.200 |
| Post-processing pitch angle (degree) | 1.80 | 2.00 | 2.00 | 5.00 | 6.00 | 6.00 | 6.00 | 7.20 | 7.20 |
| Total error (mm) | 0.000 | 0.000 | 0.000 | 0.000 | 0.000 | 0.000 | 0.000 | 0.000 | 0.000 |
| Total error angle (degree) | 0.00 | 0.00 | 0.00 | 0.00 | 0.00 | 0.00 | 0.00 | 0.00 | 0.00 |
| Error ratio (%) | 0.0 | 0.0 | 0.0 | 0.0 | 0.0 | 0.0 | 0.0 | 0.0 | 0.0 |
| Average temperature (index) | 85 | | | 109 | | | 122 | | |
| Running distance (index) | 115 | | | 95 | | | 80 | | |
| Increased weight (index) | 210 | | | 72 | | | 60 | | |
| Processing preparation time (index) | 32 | | | 32 | | | 32 | | |

### [Table 5]

**Table 5 Results of Evaluation**

| | Example 12 | | | Example 13 | | |
|---|---|---|---|---|---|---|
| Size | 215/50R17 | | | 215/50R17 | | |
| Front view | FIG. 5 | | | FIG. 6 | | |
| Row | I | II | III | I | II | III |
| Radius (mm) | 583.2 | 564.6 | 544.8 | 583.2 | 564. 6 | 544.8 |
| Circumferential length (mm) | 1832.18 | 1773.74 | 1711.54 | 1832.18 | 1773. 74 | 1711.54 |
| Number | 90 | 90 | 90 | 90 | 90 | 90 |
| Pitch (mm) | 20. 36 | 19.71 | 19.02 | 20. 36 | 19.71 | 19.02 |
| Proper pitch angle (degree) | 4.000 | 4.000 | 4.000 | 4.000 | 4.000 | 4.000 |
| Post-processing pitch angle (degree) | 4.0 | 4.0 | 4.0 | 4.0 | 4.0 | 4.0 |
| Total error (mm) | 0.000 | 0.000 | 0.000 | 0.000 | 0.000 | 0.000 |
| Total error angle (degree) | 0.00 | 0.00 | 0.00 | 0.00 | 0.00 | 0.00 |
| Error ratio (%) | 0.0 | 0.0 | 0.0 | 0.0 | 0.0 | 0.0 |
| Average temperature (index) | 98 | | | 96 | | |
| Running distance (index) | 100 | | | 102 | | |
| Increased weight (index) | 101 | | | 101 | | |
| Processing preparation time (index) | 27 | | | 27 | | |

### [Table 6]

**Table 6 Details of Processing Preparation Time**

| | Comp. Example 1 | | Example 1 | | Example 2 | | Example 3 | | Example 4 | | Example 5 | | Example 6 | |
|---|---|---|---|---|---|---|---|---|---|---|---|---|---|---|
| Row | I | II | I | II | I | II | I | II | I | II | I | II | I | II |
| Element data preparation | 20 | 20 | 20 | 20 | 20 | 10 | 20 | 10 | 20 | 10 | 20 | 10 | 20 | 10 |
| Final pitch designing | 20 | 20 | 0 | 0 | 0 | 0 | 0 | 0 | 0 | 0 | 0 | 0 | 0 | 0 |
| Processing data creation | 100 | 100 | 100 | 100 | 100 | 0 | 100 | 0 | 100 | 0 | 100 | 0 | 100 | 0 |
| Final handling of data | 30 | 30 | 0 | 0 | 0 | 0 | 0 | 0 | 0 | 0 | 0 | 0 | 0 | 0 |
| Check | 20 | 20 | 20 | 20 | 20 | 10 | 20 | 10 | 20 | 10 | 20 | 10 | 20 | 10 |
| Final pitch check | 20 | 20 | 0 | 0 | 0 | 0 | 0 | 0 | 0 | 0 | 0 | 0 | 0 | 0 |
| Total | 420 | | 280 | | 160 | | 160 | | 160 | | 160 | | 160 | |

### [Table 7]

**Table 7 Details of Processing Preparation Time**

| | Com. Example 2 | | | Example 7 | | | Example 8 | | | Example 9 | | |
|---|---|---|---|---|---|---|---|---|---|---|---|---|
| Row | I | II | III | I | II | III | I | II | III | I | II | III |
| Element data preparation | 20 | 20 | 20 | 20 | 10 | 10 | 20 | 20 | 10 | 20 | 20 | 10 |
| Final pitch designing | 20 | 20 | 20 | 0 | 0 | 0 | 0 | 0 | 0 | 0 | 0 | 0 |
| Processing data creation | 100 | 100 | 100 | 100 | 0 | 0 | 100 | 0 | 0 | 100 | 0 | 0 |
| Final handling of data | 30 | 30 | 30 | 0 | 0 | 0 | 0 | 0 | 0 | 0 | 0 | 0 |
| Check | 20 | 20 | 20 | 20 | 10 | 0 | 20 | 20 | 10 | 20 | 20 | 10 |
| Final pitch check | 20 | 20 | 20 | 0 | 0 | 0 | 0 | 0 | 0 | 0 | 0 | 0 |
| Total | 630 | | | 170 | | | 200 | | | 200 | | |

### [Table 8]

**Table 8 Details of Processing Preparation Time**

| | Example 10 | | | Example 11 | | | Example 12 | | | Example 13 | | |
|---|---|---|---|---|---|---|---|---|---|---|---|---|
| Row | I | II | III | I | II | III | I | II | III | I | II | III |
| Element data preparation | 20 | 20 | 10 | 20 | 20 | 10 | 20 | 10 | 10 | 20 | 10 | 10 |
| Final pitch designing | 0 | 0 | 0 | 0 | 0 | 0 | 0 | 0 | 0 | 0 | 0 | 0 |
| Processing data creation | 100 | 0 | 0 | 100 | 0 | 0 | 100 | 0 | 0 | 100 | 0 | 0 |
| Final handling of data | 0 | 0 | 0 | 0 | 0 | 0 | 0 | 0 | 0 | 0 | 0 | 0 |
| Check | 20 | 20 | 10 | 20 | 20 | 10 | 20 | 10 | 0 | 20 | 10 | 0 |
| Final pitch check | 0 | 0 | 0 | 0 | 0 | 0 | 0 | 0 | 0 | 0 | 0 | 0 |
| Total | 200 | | | 200 | | | 170 | | | 170 | | |

As shown in Tables 1 to 5, both desired durability and easiness of processing of a mold are achieved in the tire of each Example. From the results of evaluation, advantages of the present invention are clear.

### INDUSTRIAL APPLICABILITY

The pneumatic tire according to the present invention can be mounted on various vehicles.

### DESCRIPTION OF THE REFERENCE CHARACTERS

2, 66, 68, 70, 72, 74···tire
4···tread
8···sidewall
10···clinch
12···bead
14···carcass
16···support layer
18···belt
20···band
62, 76, 78···dimple
64···land
80···element

## Claims

1. A pneumatic tire (2) comprising:
a tread (4) having an outer surface which forms a tread surface;
a pair of sidewalls (8) extending from ends, respectively, of the tread (4) substantially inward in the radial direction;
a pair of beads (12) located substantially inward of the sidewalls (8), respectively, in the radial direction;
a carcass (14) extending along the tread (4) and the sidewalls (8) and on and between the beads (12); and
a plurality of recessed elements (62) and a land (64) which is a part other than the recessed elements (62) on the surfaces of the sidewalls (8), wherein
each element (62) is surrounded by the land (64), and these elements (62) are arranged along a circumferential direction at equal pitches,
wherein the tire includes a first row (I) in which a first number of recessed elements (62) are aligned along the circumferential direction and a second row (II) in which a second number of recessed elements (62) are aligned along the circumferential direction,
**characterized in that**
the pneumatic tire (2) comprises a pair of load support layers (16) located inward of the sidewalls (8), respectively, in the axial direction;
wherein the contour of each recessed element (62) is a rectangle with each corner being rounded,
the number of the elements (62) per one rotation is 60, 72, 75, 80, 90, 100, 120, 144, 150, 160, 180, or 200, and
a ratio of a length, in the circumferential direction, of each element (62) relative to the pitch is equal to or greater than 70% but equal to or less than 95%.

2. The tire according to claim 1, wherein the pitch between the elements (62) is equal to or greater than 10 mm but equal to or less than 30 mm.

3. The tire according to claim 1, wherein the first number of recessed elements (62) is different from the second number of recessed elements (62).

4. The tire according to claim 1, wherein the first number of recessed elements (62) is the same as the second number of recessed elements (62).

5. The tire according to claim 4, wherein positions, in the circumferential direction, of the recessed elements (62) of the second row (II) are displaced relative to positions, in the circumferential direction, of the recessed elements (62) of the first row (I).

6. The tire according to claim 5, wherein the recessed elements (62) of the first row (I) and the recessed elements (62) of the second row (II) are alternately arranged.

## Patentansprüche

1. Luftreifen (2), umfassend:
eine Lauffläche (4), die eine Außenfläche aufweist, die eine Laufflächen-Oberfläche bildet;
ein Paar Seitenwände (8), die sich jeweils von Enden der Lauffläche (4) im Wesentlichen in der radialen Richtung nach innen erstrecken;
ein Paar Wülste (12), die jeweils im Wesentlichen in der radialen Richtung innen von den Seitenwänden (8) gelegen sind;
eine Karkasse (14), die sich entlang der Lauffläche (4) und der Seitenwände (8) und auf und zwischen den Wülsten (12) erstreckt; und
eine Mehrzahl von vertieften Elementen (62) und einen Vorsprung (64), der ein anderer Teil als die vertieften Elemente (62) ist, auf den Oberflächen der Seitenwände (8), wobei
jedes Element (62) von dem Vorsprung (64) umgeben ist, und diese Elemente (62) entlang der Umfangsrichtung in gleichen Teilungsabständen angeordnet sind,
wobei der Reifen eine erste Reihe (I) umfasst, in welcher eine erste Anzahl von vertieften Elementen (62) entlang der Umfangsrichtung ausgerichtet ist, und eine zweite Reihe (II), in welcher eine zweite Anzahl von vertieften Elementen (62) entlang der Umfangsrichtung ausgerichtet ist,
**dadurch gekennzeichnet, dass**
der Luftreifen (2) ein Paar Lasttragschichten (16) umfasst, die jeweils in der axialen Richtung innen von den Seitenwänden (8) gelegen sind;
wobei die Kontur jedes vertieften Elements (62) ein Rechteck ist, wobei jede Ecke gerundet ist,
die Anzahl der Elemente (62) je einer Umdrehung 60, 72, 75, 80, 90, 100, 120, 144, 150, 160, 180 oder 200 beträgt, und
ein Verhältnis einer Länge in der Umfangsrichtung jedes Elements (62) relativ zu dem Teilungsabstand gleich oder größer als 70% aber gleich oder kleiner als 95% ist.

2. Reifen nach Anspruch 1, wobei der Teilungsabstand zwischen den Elementen (62) gleich oder größer als 10 mm aber gleich oder kleiner als 30 mm ist.

3. Reifen nach Anspruch 1, wobei die erste Anzahl von vertieften Elementen (62) sich von der zweiten Anzahl von vertieften Elementen (62) unterscheidet.

4. Reifen nach Anspruch 1, wobei die erste Anzahl von vertieften Elementen (62) gleich ist wie die zweite Anzahl von vertieften Elementen (62).

5. Reifen nach Anspruch 4, wobei Abschnitte der vertieften Elemente (62) der zweiten Reihe (II) in der Umfangsrichtung relativ zu Positionen der vertieften Elemente (62) der ersten Reihe (I) in der Umfangsrichtung verschoben sind.

6. Reifen nach Anspruch 5, wobei die vertieften Elemente (62) der ersten Reihe (I) und die vertieften Elemente (62) der zweiten Reihe (II) abwechselnd angeordnet sind.

## Revendications

1. Bandage pneumatique (2) comprenant :
une bande de roulement (4) ayant une surface extérieure qui forme une surface de roulement ;
une paire de parois latérales (8) s'étendant depuis des extrémités, respectivement, de la bande de roulement (4) sensiblement vers l'intérieur dans la direction radiale ;
une paire de talons (12) situés sensiblement à l'intérieur des parois latérales (8), respectivement, dans la direction radiale ;
une carcasse (14) s'étendant le long de la bande de roulement (4) et des parois latérales (8), et sur les talons et entre ceux-ci (12) ; et
une pluralité d'éléments évidés (62) et un relief (64) qui est une partie autre que les éléments évidés (62) sur les surfaces des parois latérales (8), dans lequel
chaque élément (62) est entouré par le relief (64), et ces éléments (62) sont agencés le long d'une direction circonférentielle à des pas égaux,
dans lequel le pneumatique inclut une première rangée (I) dans laquelle un premier nombre d'éléments évidés (62) sont alignés le long de la direction circonférentielle et une seconde rangée (II) dans laquelle un second nombre d'éléments évidés (62) sont alignés le long de la direction circonférentielle,
**caractérisé en ce que**
le bandage pneumatique (2) comprend une paire de couches de support de charge (16) situées à l'intérieur des parois latérales (8), respectivement, dans la direction axiale ;
dans lequel le contour de chaque élément évidé (62) est un rectangle dans lequel chaque coin est arrondi,
le nombre des éléments (62) pour chaque rotation est égal à 60, 72, 75, 80, 90, 100, 120, 144, 150, 160, 180, ou 200, et
un rapport d'une longueur, dans la direction circonférentielle, de chaque élément (62) par rapport au pas est égal ou supérieur à 70 % mais égal ou inférieur à 95 %.

2. Pneumatique selon la revendication 1, dans lequel le pas entre les éléments (62) est égal ou supérieur à 10 mm, mais égal ou inférieur à 30 mm.

3. Pneumatique selon la revendication 1, dans lequel le premier nombre d'éléments évidés (62) est différent du second nombre d'éléments évidés (62).

4. Pneumatique selon la revendication 1, dans lequel le premier nombre d'éléments évidés (62) est le même que le second nombre d'éléments évidés (62).

5. Pneumatique selon la revendication 4, dans lequel les positions, dans la direction circonférentielle, des éléments évidés (62) de la seconde rangée (II) sont déplacées par rapport aux positions, dans la direction circonférentielle, des éléments évidés (62) de la première rangée (I).

6. Pneumatique selon la revendication 5, dans lequel les éléments évidés (62) de la première rangée (I) et les éléments évidés (62) de la seconde rangée (II) sont agencés de façon alternée.
